**Europäisches Patentamt**

**European Patent Office**

**Office européen des brevets**

(19)

(11) Numéro de publication: **0 061 389**
**B1**

(12) **FASCICULE DE BREVET EUROPEEN**

(45) Date de publication du fascicule du brevet:
**11.07.84**

(21) Numéro de dépôt: **82400456.8**

(22) Date de dépôt: **12.03.82**

(51) Int. Cl.³: **C 04 B 35/46,** H 01 G 4/12,
H 01 B 3/12

(54) Compositions céramiques diélectriques, condensateurs utilisant de telles compositions, et procédé de fabrication desdites compositions.

(30) Priorité: **18.03.81 FR 8105403**

(43) Date de publication de la demande:
**29.09.82 Bulletin 82/39**

(45) Mention de la délivrance du brevet:
**11.07.84 Bulletin 84/28**

(84) Etats contractants désignés:
**DE GB NL**

(56) Documents cités:
**US - A - 2 815 291**
**US - A - 3 753 911**
**US - A - 4 082 906**

(73) Titulaire: **L.C.C.-C.I.C.E. - COMPAGNIE EUROPEENNE DE COMPOSANTS ELECTRONIQUES, 101, Boulevard Murat, F-75781 Paris Cedex 16 (FR)**

(72) Inventeur: **Lagrange, Alain, THOMSON-CSF SCPI 173, bld Haussmann, F-75360 Paris Cedex 08 (FR)**
Inventeur: **Beauger, Alain, THOMSON-CSF SCPI 173, bld Haussmann, F-75360 Paris Cedex 08 (FR)**

(74) Mandataire: **Vesin, Jacques et al, THOMSON-CSF SCPI 173, Bld Haussmann, F-75379 Paris Cedex 08 (FR)**

## Description

La présente invention concerne des compositions céramiques diélectriques de nature ferroélectrique ainsi que des condensateurs utilisant de telles compositions. Elle concerne également un procédé de fabrication de ces compositions.

De telles compositions céramiques sont bien connues notamment dans leurs applications pour la réalisation de condensateurs, du fait de leur très haute constante diélectrique. De telles compositions céramiques bien connues de l'homme de l'art sont par exemple décrites dans les brevets américains N° 2 402 518, 2 443 211, 3 529 978 et 3 612 963. Généralement, ces compositions céramiques sont frittées à l'air ou sous atmosphère réductrice à des températures voisines de 1200 à 1400 degrés Celsius. Lorsqu'on réalise en particulier des condensateurs tels que par exemple des condensateurs du type multi-couches, les électrodes métalliques de ces condensateurs sont bien entendu déposées sur la matière céramique avant le frittage. Par conséquent, ceci nécessite d'utiliser des électrodes en métaux précieux tels que le platine, le palladium, l'or ou leurs alliages. Ces électrodes sont généralement déposées par sérigraphie à l'aide d'un écran de soie. Mis à part le coût élevé des électrodes desdits condensateurs, il est important que les matériaux utilisés n'aient pas d'interaction avec la céramique au cours du frittage et qu'il ne se produise aucune discontinuité dans les électrodes. Or, plus la température de frittage est élevée plus la probabilité d'obtenir de tels défauts augmente.

Le brevet US-A-2 815 291 décrit des compositions à base de titanate de baryum comportant un excès de baryum pour améliorer le coefficient de température desdites compositions. De telles compositions comportent cependant les inconvénients cités plus haut.

Plus récemment, il a été décrit dans le brevet américain N° 4 082 906 un condensateur céramique multi-couche dont la couche de céramique comporte au moins 50% de titanate de baryum et de 0,25% à 10% de fluorure de lithium. Une telle composition présente l'avantage d'une part d'être frittable c'est-à-dire engendrer un corps après cuisson qui soit plus dense qu'avant cuisson, et d'autre part d'avoir une température de frittage nettement moins élevée que les compositions céramiques connues auparavant, cette température étant comprise entre 750° Celsius et 1250° Celsius. Il est d'ailleurs à noter que les propriétés de telles compositions étaient déjà connues, notamment de l'article intitulé «Densification and strenght of $BaTiO_3$ with LiF and MgO additives» publié dans la revue American Ceramic Society Bulletin – 1976, volume 55, N° 3, page 273 à 285. De telles compositions utilisent habituellement des titanates de baryum sensiblement stœchiométriques, c'est-à-dire comportant sensiblement le même nombre d'ions baryum et d'ions titane.

Or, on sait qu'habituellement les compositions céramiques à base de titanate de baryum n'utilisent pas ce corps sous une forme stœchiométrique. En effet, l'homme de l'art sait qu'habituellement le température de frittage du titanate de baryum tend à diminuer lorsque l'on met un léger excès d'ions titane par rapport aux ions baryum, ceci généralement dans des proportions de l'ordre de 2%. Inversement, il est bien connu qu'une diminution du nombre d'ions titane par rapport au nombre d'ions baryum dans le titanate de baryum conduit habituellement à une augmentation de la température de frittage. (Par température de frittage, on entend bien entendu la température ou plage de température à laquelle on obtient une densification maximum du produit).

Les compositions telles que décrites ci-dessus comportant un léger excès d'ions titane par rapport aux ions baryum permettent d'obtenir des céramiques diélectriques parfaitement utilisables pour la réalisation de condensateurs et en particulier de condensateurs céramiques multi-couches.

Compte tenu de l'art antérieur exposé ci-dessus, il a maintenant été trouvé, de façon totalement inattendue, de nouvelles compositions céramiques à base de titanate de baryum et de fluorure de lithium ayant des propriétés améliorées par rapport à celles des compositions connues jusqu'à ce jour et conservant une basse température de frittage.

Selon l'invention, ces compositions sont caractérisées en ce qu'elles comportent de 90% à 98,5% en poids de titanate de baryum $BaTiO_3$ et de 1,5% à 10% en poids de fluorure de lithium, ledit titanate de baryum ayant

$$\text{un rapport molaire } x = \frac{TiO_2}{BaO} \text{ inférieur à 1.}$$

Selon un mode préférentiel de réalisation, les compositions selon l'invention sont caractérisées en ce que x est inférieur à 0,99 et de préférence compris entre 0,98 et 0,97.

On a constaté en effet de façon totalement surprenante que les compositions décrites ci-dessus, bien que possédant un défaut d'ions titane par rapport au nombre d'ions baryum, permettaient d'obtenir non seulement un frittage à très basse température, de l'ordre de 900° Celsius, mais que par ailleurs ces compositions possédaient des propriétés électriques tout à fait exceptionnelles comparées aux compositions pour lesquelles on a un excès d'ions titane. En particulier, lorsque x est compris entre 0,97 et 0,98 ces propriétés électriques sont tout à fait exceptionnelles.

Par ailleurs, le temps nécessaire pour fritter ces compositions à une température de l'ordre de 900°C et obtenir les résultats annoncés ci-dessus est très inférieur au temps habituellement requis pour des compositions similaires.

De préférence, on utilisera une concentration en poids de fluorure de lithium dans les compositions de l'invention variant entre 2 et 5%, et plus particulièrement de l'ordre de 3%.

Par ailleurs, compte tenu des propriétés de température et de temps du procédé mentionné ci-dessus, les condensateurs multi-couches réalisés à l'aide des compositions selon l'invention, peuvent utiliser des électrodes comportant une très forte proportion d'argent ou même utiliser de l'argent pur, ce qui conduit également à de très sérieuses économies.

L'invention concerne également un procédé de fabrication d'une composition céramique telle que décrite ci-dessus, comportant notamment une étape au cours de laquelle on introduit à sec les éléments de ladite composition dans un solvant organique, en l'absence d'eau, puis on mélange intimement lesdits composants pendant une durée suffisante pour obtenir une barbotine homogène.

En règle générale, les compositions selon l'invention seront réalisées à partir d'un mélange de titanate de baryum et de fluorure de lithium tel que défini ci-dessus, dans lequel on rajoute un liant acrylique et éventuellement un plastifiant, le mélange s'effectuant dans un solvant choisi parmi les cétones, les alcools, le trichloréthylène, le benzène et ses dérivés alkylés. De préférence, on utilisera le trichloréthylène, le toluène, le xylène, l'acétone ou la méthyl-éthylcétone.

L'invention sera mieux comprise à l'aide des exemples de réalisation ci-joints donnés à titre non limitatif:

Exemples 1 à 6

Dans un broyeur à biles, on introduit 98 g de titanate de baryum à stœchiométrie variable, 2 g de fluorure de lithium, 150 cm³ d'alcool, et 200 g de billes. Le mélange est effectué pendant 15 heures à température ambiante. Après avoir retiré les billes, la barbotine obtenue est séchée, tamisée, et mélangée à 130 g de solution de latex à 3%. On obtient ainsi une pâte qui est mise sous forme de disques de diamètre 8,3 mm et d'épaisseur 0,5 mm. Chacune des faces de ces disques est revêtue d'une électrode en argent d'environ 10 μm d'épaisseur. Pour chacune des stœchiométries indiquées dans le tableau ci-dessous, on a réalisé une vingtaine de disques tels que décrits ci-dessus, l'ensemble de ces disques comportant du titanate de baryum à stœchiométrie variable étant introduit dans un four de frittage simultanément. L'ensemble des disques est fritté à une température de 900° Celsius pendant 1 heure 30. Les résultats obtenus sont mentionnés dans le tableau I ci-dessous:

### Tableau I

| Exemple N° | 1 | 2 | 3 | 4 | 5 | 6 |
|---|---|---|---|---|---|---|
| $TiO_2/BaO$ | 0,94 | 0,97 | 0,98 | 1 | 1,02 | 1,03 |
| $d(g/cm^3)$ | 5,15 | 5,50 | 5,43 | 4,11 | 3,48 | 3,48 |
| $\varepsilon\,20$ | 1363 | 5284 | 5507 | 2482 | 1160 | 1258 |
| $tg\delta_{20}\times10^4$ | 400 | 32 | 70 | 460 | 240 | 224 |
| $RI(100\,V)\,(G\Omega)$ | 240 | 1000 | 600 | 500 | 35 | 30 |
| $\Delta C/C$ en fonction de la température | | | | | | |
| −30° | − 2% | −15% | −32% | −52% | −35% | −38% |
| +85° | −14% | −58% | −55% | +18% | + 7% | + 9% |

Dans ce tableau, d indique la densité après frittage du matériau obtenu, ε la constante diélectrique du matériau, tangente δ la tangente de l'angle de perte, RI la résistance d'isolement du condensateur mesurée sous 100 volts et exprimée en Giga ohms, tandis que les deux dernières lignes donnent la variation de la capacité du condensateur en fonction de la température, à –30° Celsius et +95° Celsius. Les mesures sont effectués à 20°C et les mesures électriques à l'aide d'un signal de fréquence 1 KHz.

Ainsi qu'on peut le constater, pour un rapport $TiO_2/BaO$ compris entre 0,97 et 0,98, les résultats obtenus sont excellents.

Exemples 7 à 12

On effectue les mêmes préparations de disques que précédemment dans les mêmes conditions, en effectuant le frittage à la température de 930° Celsius, pendant la même durée. Toutes choses égales par ailleurs, les résultats obtenus sont mentionnés dans le tableau II ci-dessous:

### Tableau II

| Exemple N° | 7 | 8 | 9 | 10 | 11 | 12 |
|---|---|---|---|---|---|---|
| $TiO_2/BaO$ | 0,94 | 0,97 | 0,98 | 1 | 1,02 | 1,03 |
| $d(g/cm^3)$ | 5,05 | 5,60 | 5,65 | 4,90 | 3,60 | 4,01 |
| $\varepsilon\,20$ | 1213 | 4957 | 5484 | 3688 | 2167 | 3158 |
| $tg\delta_{20}\times10^4$ | 1450 | 70 | 139 | 319 | 606 | 390 |
| $RI(100\,V)\,(G\Omega)$ | 24 | 1300 | 600 | 26 | 40 | 19 |

**Tableau II** (suite)

| Exemple No | 7 | 8 | 9 | 10 | 11 | 12 |
|---|---|---|---|---|---|---|
| Variation de $\Delta C/C$ en fonction de la température | | | | | | |
| $-30°$ | | $-16\%$ | $-15\%$ | $-40\%$ | $-48\%$ | $-42\%$ | $-45\%$ |
| $+85°$ | | $-14\%$ | $-50\%$ | $-40\%$ | $+10\%$ | $+42\%$ | $+50\%$ |

Comme dans le cas des exemples précédents, on constate que les résultats obtenus pour un rapport $TiO_2/BaO$ variant entre 0,97 et 0,98 sont particulièrement excellents.

### Exemples 13 et 14

Cet exemple montre l'influence du procédé de préparation sur les résultats de la composition céramique obtenue. On prépare comme dans le cas des exemples 1 à 6 des échantillons pour former des disques qui sont ensuite métallisés. Tous les paramètres sont identiques à ceux des exemples précédents 1 à 6 avec toutefois les modifications suivantes: le rapport $TiO_2/BaO$ est égal à 0,97, la température de frittage est de 930°C, pendant 1 heure 30 min. Les résultats obtenus sont résumés dans le tableau III ci-dessous:

**Tableau III**

| Exemple No | 13 | 14 |
|---|---|---|
| | Préparation à l'eau | Préparation à l'alcool |
| $d(g/cm^3)$ | 4,60 | 5,44 |
| $\varepsilon\,20$ | 2252 | 4957 |
| $tg\delta \times 10^4$ | 540 | 70 |
| $RI(100\,V)\,(G\Omega)$ | 2 | 1300 |
| Variation de $\Delta C/C$ en fonction de la température | | |
| $-30°$ | $-40\%$ | $-15\%$ |
| $+85°$ | $+28\%$ | $-50\%$ |
| Tc | $+90°$ | $+10°$ |

Sur ce tableau, les symboles ont les mêmes significations que dans les tableaux précédents. Dans ce tableau, Tc désigne la température de Curie de la céramique obtenue. Dans le cas de l'exemple 13, on a mis la même quantité en volume d'eau que dans l'exemple 14 où l'on utilise l'alcool. Cette quantité est, ainsi que cela a été précisé plus haut, de 150 cm³. Il est très important de constater sur ce tableau que l'utilisation d'un solvant organique au lieu d'eau, pour réaliser la barbotine, donne de bien meilleurs résultats.

### Exemple 15

Cet exemple concerne la réalisation d'un condensateur multi-couches comportant 20 couches diélectriques actives et réalisé selon la technique bien connue telle que décrite par exemple dans le brevet américain 4 082 906. La préparation de la composition diélectrique s'effectue comme dans le cas des exemples 1 à 6, avec toutefois un rapport $TiO_2/Ba\,O$ égal à 0,98, une température de frittage de 930°C, pendant 1 heure 30 min. On prend 1 kg de mélange $BaTiO_3$ et LiF tel que décrit ci-dessus auquel on ajoute 675 g de trichloréthylène, 460 g d'une solution organique à 20% d'un liant acrylique et 15 g de plastifiant à base de dibutylphtalate. L'ensemble est mélangé dans un broyeur à billes pendant 15 heures. La barbotine obtenue est coulée ensuite sur un support. L'épaisseur de diélectrique déposée avant frittage est de 38 microns, l'épaisseur de chaque couche diélectrique après frittage étant d'environ 30 microns. On réalise un condensateur multi-couches constitué d'une alternance de 20 feuilles diélectriques telles que définies ci-dessus et d'encre métallique déposée à l'aide d'un écran de soie à base d'un mélange de 10% en poids de palladium et 90% en poids d'argent. Les électrodes superficielles sont bien entendu comme cela est couramment pratiquée dans la technique, recouvertes d'un certain nombre de couches diélectriques telles que définies ci-dessus qui sont inactives dans le fonctionnement du condensateur mais qui ont un rôle de protection de celui-ci. Les conditions de frittage du condensateur sont celles qui ont été définies plus haut. Les résultats obtenus sont mentionnés dans le tableau IV ci-dessous:

**Tableau IV**

| Exemple No | 15 |
|---|---|
| Capacité | 289 nF |
| $\varepsilon\,20$ | 9000 |
| $tg\delta \times 10^4$ | 140 |
| $RI(100\,V)$ | 90 G$\Omega$ |
| Variation $\Delta C/C$ en fonction de la température | |
| $-30°$ | $-45\%$ |
| $+85°$ | $-59\%$ |
| Tc | $+25°C$ |

Il est à noter que dans ce tableau, la tangente de l'angle de perte a été mesurée sous 1 volt efficace à 1 KHz.

On constate donc que les résultats obtenus sur des condensateurs du type disques sont également obtenus avec des condensateurs multi-couches. Ceux-ci possèdent les mêmes propriétés inattendues que les condensateurs disques précédemment testés.

### Exemples 16 à 22

Les exemples ci-dessous montrent l'influence de la variation de la proportion de fluorure de lithium et donc de titanate de baryum dans la composition selon l'invention. Les compositions céramiques sont préparées comme dans le cas des exemples 1 à 6 avec un rapport $TiO_2/BaO$ égal à 0,97 et une température de frittage de 930°C. Comme dans le cas de tous les exemples précédents, sauf l'exemple 15, les tests électriques sont effectués sur des condensateurs disques. Les résultats obtenus sont consignés dans le tableau V ci-dessous:

Tableau V

| Exemple N° | 16 | 17 | 18 | 19 | 20 | 21 | 22 |
|---|---|---|---|---|---|---|---|
| % LiF | 0,5 | 1 | 1,5 | 2 | 3 | 5 | 10 |
| $d(g/cm^3)$ | 3,89 | 3,93 | 4,71 | 5,60 | 5,58 | 5,49 | 4,96 |
| $\varepsilon$ 20 | 1229 | 1123 | 2262 | 4957 | 6548 | 5909 | 2104 |
| $tg\delta 10^4$ | 180 | 128 | 180 | 70 | 40 | 45 | 218 |
| RI(100 V)G$\Omega$ | 0,7 | 0,15 | 3,5 | 1300 | 700 | 450 | 30 |
| Variation de $\Delta$ C/C en fonction de la température | | | | | | | |
| −30° | −20% | −15% | −15% | −15% | −27% | −20% | −28% |
| +85° | + 4% | 0 | −15% | −50% | −60% | −62% | −36% |

Ainsi qu'on peut le constater sur le tableau V ci-dessus, les meilleurs résultats sont obtenus pour un pourcentage de fluorure de lithium variant entre 1,5 et 10% en poids par rapport au poids de la composition totale, ces résultats étant toutefois encore nettement améliorés entre 2 et 5% en poids.

Les résultats indiqués dans ce tableau montrent qu'une concentration de l'ordre de 3% en fluorure de lithium apporte le meilleur compromis dans le cas de réalisation d'un condensateur.

**Revendications**

1. Composition céramique diélectrique comportant de 90% à 98,5% en poids de titanate de baryum $BaTiO_3$ et de 1,5% à 10% en poids de fluorure de lithium, caractérisée en ce que ledit titanate de baryum

un rapport molaire $x = \dfrac{TiO_2}{BaO}$ inférieur à 1.

2. Composition céramique selon la revendication 1, caractérisée en ce que x est inférieur à 0,99.

3. Composition céramique selon la revendication 1, caractérisée en ce que x est supérieur ou égal à 0,97 et inférieur ou égal à 0,98.

4. Composition céramique selon l'une des revendications 1 à 3, caractérisée en ce qu'elle comporte de 2 à 5% en poids de fluorure de lithium.

5. Composition céramique selon la revendication 4, caractérisée en ce qu'elle comporte environ 3% en poids de fluorure de lithium.

6. Condensateur céramique multi-couches comportant une pluralité d'électrodes en matériau électriquement conducteur, séparées par une pluralité de couches diélectriques céramiques, deux électrodes successives étant séparées par au moins une couche diélectrique, les électrodes de rangs pairs et de rangs impairs étant respectivement connectées électriquement entre elles, caractérisé en ce que la composition céramique est conforme à l'une des revendications 1 à 5.

7. Procédé pour la fabrication d'une composition céramique selon des revendications 1 à 5, caractérisé en ce qu'il comporte une étape au cours de laquelle on introduit à sec les éléments de ladite composition dans un solvant organique, en l'absence d'eau, puis on mélange intimement lesdits composants pendant une durée suffisante pour obtenir une barbotine homogène.

8. Procédé selon la revendication précédente, caractérisé en ce que le solvant organique est choisi parmi les alcools, les cétones, le benzène et ses dérivés alkylés et le trichloréthylène.

**Claims**

1. A dielectric ceramic composition comprising 90 to 98,5 percent by weight of barium titanate $BaTiO_3$ and 1,5 to 10 percent by weight of lithium fluoride, characterized in that said barium titanate has

a molar ratio $x = \dfrac{TiO_2}{BaO}$ which is less than 1.

2. A ceramic composition according to claim 1, characterized in that x is less than 0,99.

3. A ceramic composition according to claim 1, characterized in that x is at least 0,97 and less than or equal to 0,98.

4. A ceramic composition according to one of the claims 1 to 3, characterized in that it comprises 2 to 5 percent by weight of lithium fluoride.

5. A ceramic composition according to claim 4, characterized in that it comprises about 3 percent by weight of lithium fluoride.

6. A multi-layer ceramic capacitor comprising a plurality of electrodes made of an electrically conductive material and separated by a plurality of dielectric ceramic layers, two successive electrodes being separated by at least one dielectric layer, the electrodes of even ranks and of odd ranks respectively being connected with each other, characterized in that the ceramic composi-

# 9 — 0 061 389 — 10

tion is chosen according to one of the claims 1 to 5.

7. A process for the manufacture of a ceramic composition according to the claims 1 to 5, characterized in that it comprises a step during which the elements of said composition are introduced in dry state into an organic solvent, in the absence of water, then a step in which said components are closely mixed during a time interval which is sufficient to obtain a homogeneous argil.

8. A process according to the preceding claim, characterized in that the organic solvent is chosen amongst the alcohols, the ketons, the benzene and its alkyl derivatives, and trichlorethylene.

## Patentansprüche

1. Dielektrischer keramischer Stoff, der 90 bis 98,5 Gew.% Bariumtitanat BaTiO$_3$ und 1,5 bis 10 Gew.% Lithiumfluorid enthält, dadurch gekennzeichnet, dass das Bariumtitanat

$$ein\ Molarverhältnis\ x = \frac{TiO_2}{BaO}\ kleiner\ 1\ aufweist.$$

2. Keramischer Stoff nach Anspruch 1, dadurch gekennzeichnet, dass x kleiner als 0,99 ist.

3. Keramischer Stoff nach Anspruch 1, dadurch gekennzeichnet, dass x grösser oder gleich 0,97 und kleiner oder gleich 0,98 ist.

4. Keramischer Stoff nach einem der Ansprüche 1 bis 3, dadurch gekennzeichnet, dass er 2 bis 5 Gew.% Lithiumfluorid enthält.

5. Keramischer Stoff nach Anspruch 4, dadurch gekennzeichnet, dass er etwa 3 Gew.% Lithiumfluorid enthält.

6. Keramischer Vielschichtkondensator, der eine Vielzahl von Elektroden aus elektrisch leitendem Material aufweist, die durch eine Vielzahl von dielektrischen Keramikschichten getrennt sind, wobei zwei aufeinanderfolgende Elektroden durch mindestens eine dielektrische Schicht getrennt sind und die Elektroden gerader und ungerader Ordnung jeweils untereinander elektrisch verbunden sind, dadurch gekennzeichnet, das der keramische Stoff dem eines der Ansprüche 1 bis 5 entspricht.

7. Verfahren zur Herstellung eines keramischen Stoffes nach den Ansprüchen 1 bis 5, dadurch gekennzeichnet, dass es einen Verfahrensschritt aufweist, währenddessen die Elemente des Stoffes trocken in ein organisches Lösungsmittel in Abwesenheit von Wasser eingebracht werden, und dass dann die Bestandteile während einer Zeitdauer gründlich miteinander vermischt werden, die ausreicht, um eine homogene Masse zu erhalten.

8. Verfahren nach dem vorstehenden Anspruch, dadurch gekennzeichnet, dass das organische Lösungsmittel aus den Alkoholen, den Ketonen, dem Benzol und seinen Alkylderivaten und dem Trichloräthylen ausgewählt wird.